# FASCICULE DE BREVET EUROPEEN

(11) **EP 2 872 404 B1**
(45) Date de publication et mention de la délivrance du brevet: **07.03.2018**
(21) Numéro de dépôt: 13735329.8
(22) Date de dépôt: 12.07.2013
(51) Int. Cl.: B29C 61/00, B65B 53/06, B65B 59/04, B29C 63/42

(54) **INSTALLATION DE THERMORETRACTION COMPORTANT DES MOYENS DE DIFFUSION DE CHALEUR FORMANT UN ENSEMBLE UNITAIRE**
WÄRMESCHRUMPFANLAGE MIT EINER WÄRMEDISPERSIONSVORRICHTUNG ALS EINHEITLICHE ANORDNUNG
HEAT-SHRINKING INSTALLATION COMPRISING HEAT DIFFUSION MEANS FORMING A UNITARY ASSEMBLY

(30) Priorité: 12.07.2012 FR 1256748
(43) Date de publication de la demande: 20.05.2015
(73) Titulaire: Sleever International Company, 91420 Morangis (FR)
(72) Inventeur: FRESNEL, Eric, F-75014 Paris (FR)
(74) Mandataire: Parzy, Benjamin Alain
(86) Numéro de dépôt international: PCT/EP2013/064794
(87) Numéro de publication internationale: WO 2014/009529

(56) Documents cités:
- EP-A1- 1 050 466
- EP-A1- 1 232 948
- EP-A1- 2 103 527
- WO-A1-01/57458
- CN-Y- 201 193 111
- FR-A1- 2 280 555
- JP-A- 2001 171 620
- US-A1- 2005 236 833

## Description

L'invention concerne une installation de thermorétraction de manchons en matériau thermorétractable enfilés sur des supports tels que des récipients.

### ARRIERE PLAN TECHNOLOGIQUE DE L'INVENTION

Dans le domaine de la thermorétraction, il est connu des installations de thermorétraction de manchons en matériau thermorétractable enfilés sur des supports, tels que des récipients, comportant une enceinte pourvue de moyens de diffusion de chaleur au sein de l'enceinte et un convoyeur pour convoyer les supports dans l'enceinte entre une entrée de l'enceinte et une sortie de l'enceinte.

Au fur et à mesure du convoyage du support à l'intérieur de l'enceinte, sous l'action du chauffage induit par les moyens de diffusion de chaleur, le manchon se ramollit puis se rétracte sur le support.

Les moyens de diffusion de chaleur peuvent par exemple comprendre des moyens de chauffage par vapeur qui comprennent des diffuseurs de vapeur fixés aux parois latérales de l'enceinte, les diffuseurs de vapeur étant reliés à un orifice d'arrivée de vapeur ménagé dans l'enceinte.

Une telle installation est divulguée dans le document EP 2 103 527 A1

### OBJET DE L'INVENTION

Un but de l'invention est de proposer une installation de thermorétraction dont l'entretien et la mise en oeuvre sont facilités.

### BREVE DESCRIPTION DE L'INVENTION

En vue de la réalisation de ce but, on propose une installation de thermorétraction de manchons en matériau thermorétractable enfilés sur des supports, tels que des récipients, comportant une enceinte, des moyens de diffusion de chaleur agencés dans l'enceinte, au moins un convoyeur pour convoyer les supports dans l'enceinte entre une entrée de l'enceinte et une sortie de l'enceinte.

Selon l'invention, les moyens de diffusion de chaleur forment un ensemble unitaire rapporté de façon démontable sur une base de l'enceinte, les moyens de diffusion de chaleur comportant des moyens de raccordement rapide à des moyens de génération de chaleur débouchant dans l'enceinte.

Ainsi, les moyens de diffusion de chaleur sont totalement indépendants de l'enceinte mis à part au niveau du raccordement aux moyens de génération de chaleur alors que dans l'art antérieur les moyens de diffusion de chaleur sont solidaires des parois de l'enceinte. Il s'avère donc bien plus simple d'intervenir sur les moyens de diffusion de chaleur et en particulier d'intervenir sur une zone particulière desdits moyens de diffusion de chaleur.

Les moyens de génération de chaleur débouchent dans l'enceinte. En particulier les moyens de génération de chaleur débouchent dans une chambre principale de l'enceinte délimitée par la base de l'enceinte, des parois latérales de l'enceinte et un sommet de l'enceinte.

De la sorte, il s'avère particulièrement simple de raccorder moyens de diffusion de chaleur et moyens de génération de chaleur. Il suffit en effet à un utilisateur d'avoir accès à la base de l'enceinte pour poser ou retirer l'ensemble unitaire et ainsi solidariser ou désolidariser les moyens de diffusion de chaleur et les moyens de génération de chaleur.

Les moyens de diffusion de chaleur sont ainsi particulièrement légers et compacts. Il est ainsi possible de réaliser des moyens de diffusion de chaleur qui ne pèsent pas plus d'une dizaine de kilogrammes.

Il s'avère ainsi très simple de changer les moyens de diffusion de chaleur simplement en désolidarisant et en soulevant l'ensemble unitaire par exemple lorsque les moyens de diffusion de chaleur sont défectueux. L'installation selon l'invention s'avère donc particulièrement modulaire. En outre, lors d'un changement de supports à convoyer à travers l'enceinte, il est aisé de remplacer les moyens de diffusion de chaleur présents dans l'enceinte par d'autres moyens de diffusion de chaleur, formant également un ensemble modulaire rapporté sur la base de l'enceinte, plus adaptés à la thermorétraction de manchons sur les nouveaux supports.

Selon l'invention, les moyens de diffusion de chaleur sont des moyens de chauffage par vapeur qui comprennent des moyens de raccordement rapide qui sont adaptés à coopérer de façon étanche avec au moins un orifice d'arrivée de vapeur ménagé dans l'enceinte.

Selon un aspect de l'invention, les moyens de chauffage sont seulement fixés à la base par les moyens de raccordement rapide.

Selon un mode de réalisation particulier, les moyens de chauffage comportent un châssis qui porte les moyens de raccordement rapide, et des moyens de diffusion de vapeur qui comprennent au moins un diffuseur qui est solidarisé de façon démontable et réglable au châssis et qui est connecté à l'orifice d'arrivée de vapeur par les moyens de raccordement rapide.

Selon un aspect de l'invention, le diffuseur comporte une rampe percée d'orifices de diffusion de vapeur, la rampe étant solidarisée au châssis de sorte à s'étendre sensiblement le long du convoyeur, et un tuyau d'amenée de vapeur raccordé à une extrémité à la rampe et à l'autre extrémité aux moyens de raccordement rapide.

Selon un mode de réalisation particulier, la rampe et le tuyau d'amenée de vapeur sont en matériau composite ou plastique.

Selon un aspect de l'invention, les moyens de raccordement rapide comportent au moins un boîtier de distribution qui est connecté à l'orifice d'arrivée de vapeur, les moyens de diffusion de vapeur comportent plusieurs diffuseurs qui sont tous raccordés au même boîtier de distribution pour être reliés à l'orifice d'arrivée de vapeur.

Selon un mode de réalisation particulier, les diffuseurs sont tous raccordées indépendamment les uns des autres au boîtier, le boîtier comporte des moyens de réglage de débits respectifs fournis à chaque diffuseur.

Selon un aspect de l'invention, les moyens de réglage comportent des ensembles vis-pointeau associés chacun à l'un des orifices de distribution de vapeur du boîtier auquel est connecté l'un des diffuseurs, chaque pointeau ayant un profil arrondi et étant déplaçable par la vis associée pour venir obstruer partiellement ou complètement l'orifice de distribution associé.

Selon un mode de réalisation particulier, les moyens de diffusion de vapeur comportent une première série de diffuseurs qui sont solidarisés au châssis de sorte que lesdits diffuseurs s'étendent tous sensiblement le long d'un premier côté du convoyeur, et une deuxième série de diffuseurs qui sont solidarisés au châssis de sorte que lesdits diffuseurs s'étendent tous sensiblement le long d'un deuxième côté du convoyeur opposé au premier côté.

Selon un aspect de l'invention, le châssis comporte deux éléments comprenant des moyens de solidarisation temporaires entre eux, le premier élément portant la première série de diffuseurs et le deuxième élément portant la deuxième série de diffuseurs.

Selon un mode de réalisation particulier, les moyens de raccordement comportent deux boîtiers de distribution connectés à des orifices d'arrivée de vapeur distincts, les deux boîtiers étant situés de part et d'autre du convoyeur de sorte que les diffuseurs de la première série soient tous reliés à l'un des orifices par l'intermédiaire de l'un des boîtiers et que les diffuseurs de la deuxième série soient tous reliés à l'autre des orifices par l'intermédiaire de l'autre des boîtiers.

Selon un aspect de l'invention, le châssis comporte deux longerons s'étendant chacun le long d'un côté différent du convoyeur et au moins deux arceaux solidarisés chacun à chaque longeron de sorte que les arceaux s'étendent au dessus du convoyeur, le diffuseur étant solidarisé à l'un des arceaux.

Selon un mode de réalisation particulier, la base de l'enceinte comporte des pieds de réception recevant les longerons du châssis, les pieds étant situés de part et d'autre du convoyeur.

Selon un aspect de l'invention, l'installation comporte des moyens de génération de chaleur raccordés aux moyens de diffusion de chaleur et un bâti portant la base et dans lequel sont agencés au moins en partie lesdits moyens de génération de chaleur, l'installation comportant en outre des moyens de séchage par air chaud d'un bras de retour du convoyeur, lesdits moyens de séchage étant raccordés à des moyens d'extraction d'air dans le bâti.

Selon un mode de réalisation particulier, l'enceinte comprend une cloche montée mobile entre une position dégagée permettant l'accès au convoyeur et une position opérationnelle où elle est rapportée à étanchéité contre la base, la cloche comportant deux ouvertures au travers desquelles le convoyeur s'étend lorsque la cloche est en position opérationnelle et comporte une cloison interne montée mobile entre une position escamotée et une position de service dans laquelle la cloison délimite avec des parois latérales de la cloche et la base une chambre principale de l'enceinte soumis à l'action des moyens de diffusion de chaleur lorsque la cloche est en position opérationnelle, la position de service de la cloison étant définie par butée de la cloison contre les moyens de diffusion de chaleur.

### BREVE DESCRIPTION DES DESSINS

L'invention sera mieux comprise à la lumière de la description qui suit en référence aux figures des dessins annexés parmi lesquelles :
- la figure 1 est une vue en perspective schématique d'une installation de thermorétraction selon l'invention, une cloche d'une enceinte de l'installation étant illustrée en position opérationnelle ;
- la figure 2 est une vue en perspective schématique d'une partie de l'installation de thermorétraction illustrée à la figure 1, des parois latérales d'un côté de l'installation de thermorétraction n'étant pas représentées ;
- la figure 3 est une vue en perspective d'une base de l'enceinte de l'installation de thermorétraction illustrée à la figure 1 ;
- la figure 4 est une vue en perspective de moyens de diffusion de chaleur de l'installation de thermorétraction illustrée à la figure 1 ;
- la figure 5 est une vue en perspective d'une cloison interne de la cloche illustrée à la figure 1 ;
- la figure 6 est une vue en perspective schématique d'une partie de l'installation de thermorétraction illustrée à la figure 1, la cloche étant illustrée en position dégagée ;
- la figure 7 est une vue en perspective de moyens de génération de chaleur de l'installation de thermorétraction illustrée à la figure 1;
- la figure 8 est une vue en perspective de moyens de génération de chaleur d'une installation de thermorétraction selon un autre mode de réalisation de l'invention.

### DESCRIPTION DETAILLEE DE L'INVENTION

L'installation décrite ici est destinée à la thermorétraction de manchons en matériau thermorétractable enfilés sur des supports, tels que des récipients. L'installation est par exemple agencée entre une installation de découpe et de pose de manchons en matériau thermorétractables sur les supports et une installation de remplissage des supports.

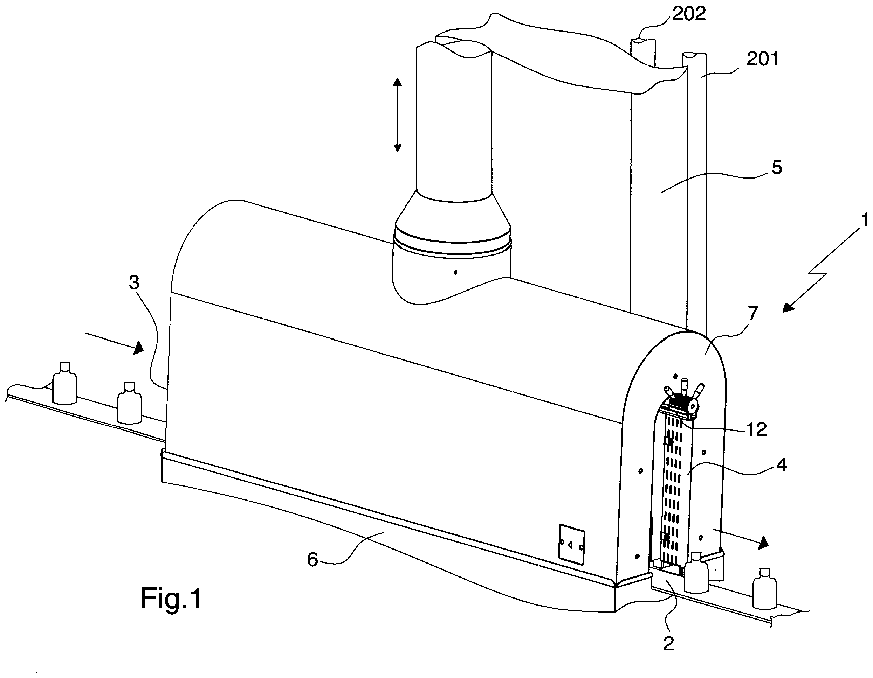

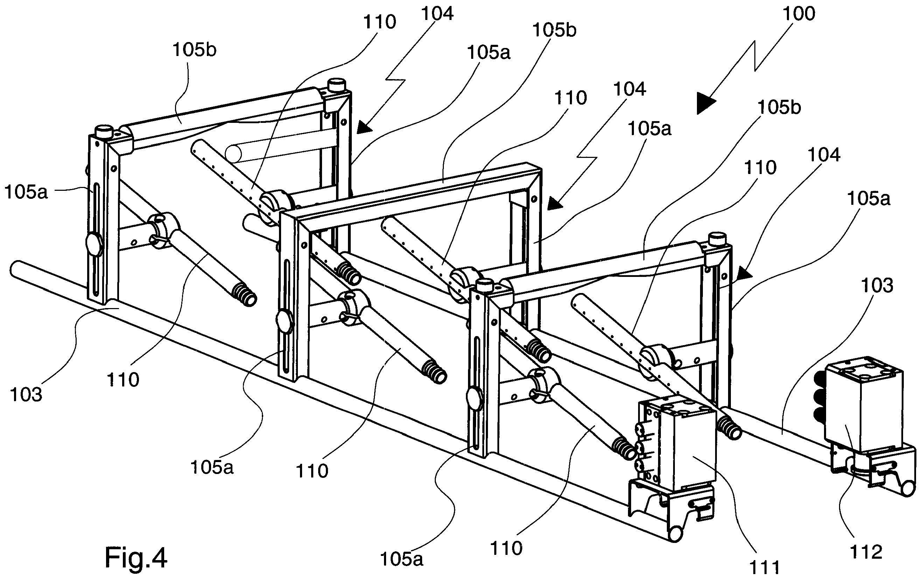

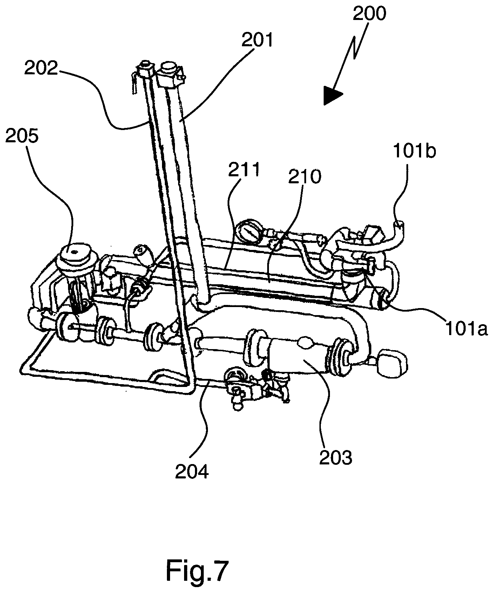

En référence aux figures 1, 2, 4 et 6, l'installation de thermorétraction selon l'invention comporte une enceinte 1 qui est pourvue de moyens de diffusion de chaleur, ici des moyens de chauffage par vapeur d'eau 100, et un convoyeur 2 pour convoyer les supports dans l'enceinte 1 entre une entrée de l'enceinte 1 et une sortie de l'enceinte 1 selon la direction indiquée par les flèches. L'installation comporte en outre des moyens de génération de vapeur d'eau 200 pour fournir de la vapeur aux moyens de chauffage 100 comme plus visibles à la figure 7.

Selon un mode de réalisation particulier, l'installation comporte un bâti 6 qui porte l'enceinte 1 et dans lequel sont agencés au moins en partie les moyens de génération de vapeur d'eau 200. L'installation comporte en outre ici des moyens de séchage par air chaud d'un bras de retour du convoyeur 2, les moyens de séchage étant raccordés à des moyens d'extraction d'air dans le bâti 6.

En effet, les moyens de génération de vapeur d'eau 200 chauffent considérablement l'intérieur du bâti 6. Ainsi, au lieu de générer de l'air chaud pour le séchage du bras de retour du convoyeur 2, on récupère directement l'air chaud du bâti 6 ce qui permet de réduire la consommation d'énergie des moyens de séchage. En outre, cela permet d'évacuer une partie de l'air chaud présent dans le bâti 6 et donc de limiter une surchauffe à l'intérieur du bâti 6.

L'enceinte et les moyens de génération de vapeur d'eau 200 seront décrits plus en détail dans un deuxième temps. On s'attache tout d'abord à décrire les moyens de chauffage par vapeur d'eau 100.

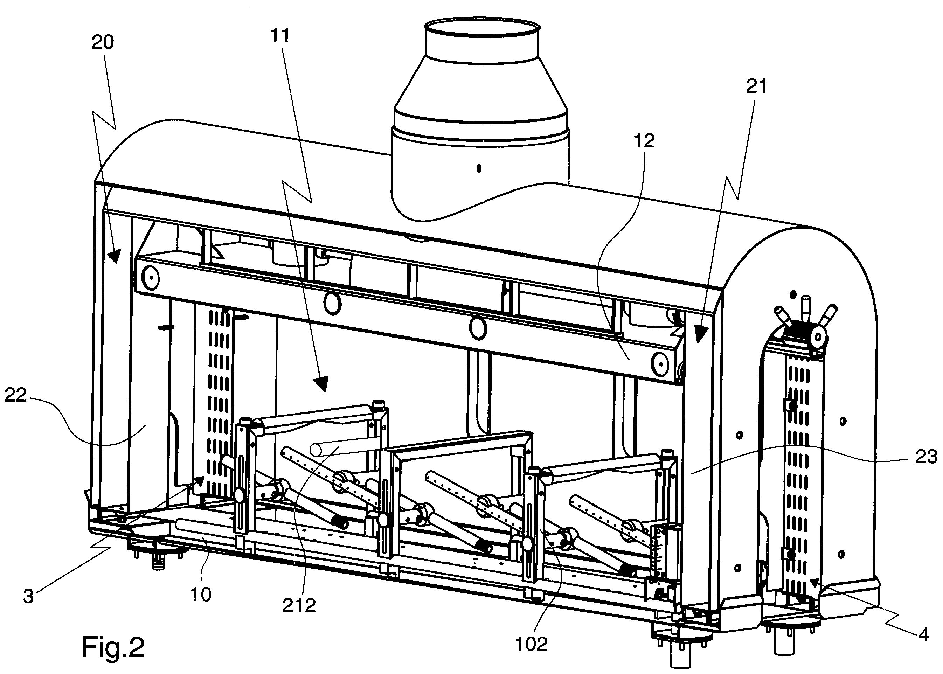

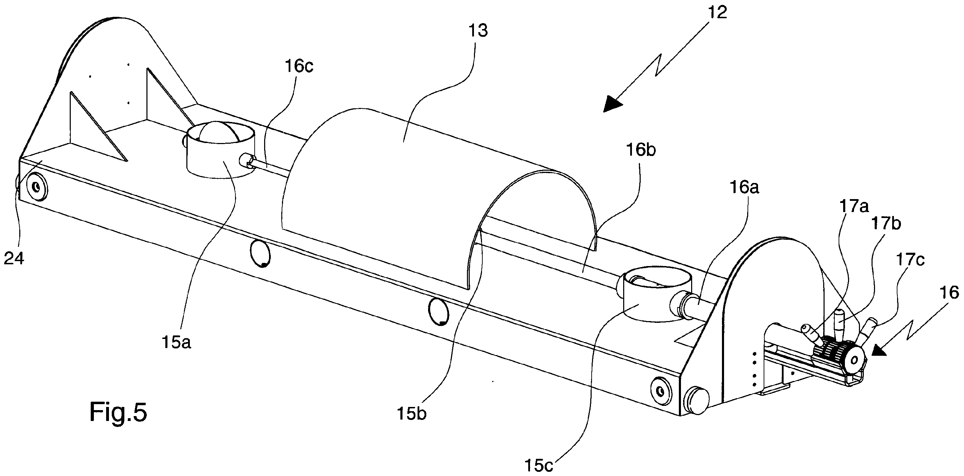

En référence aux figures 2, 4 et 5, les moyens de chauffage 100 sont ici portés par une base 10 de l'enceinte 1. Bien entendu, par base, on entend que la base 10 est sensiblement parallèle au sol sur lequel repose l'installation.

Les moyens de chauffage 100 comportent ici des moyens de diffusion de vapeur et des moyens de raccordement rapide qui sont adaptés à coopérer de façon étanche avec un premier orifice d'arrivée de vapeur 101a et un deuxième orifice d'arrivée de vapeur 101b, les deux orifices d'arrivés de vapeur étant ménagés dans l'enceinte de sorte à être placés de part et d'autre du convoyeur 2.

Selon l'invention, les moyens de chauffage 100 forment un ensemble unitaire rapporté de façon démontable sur la base 10.

Ainsi, il s'avère très simple de changer les moyens de chauffage 100 simplement en désolidarisant et en soulevant l'ensemble unitaire. L'installation selon l'invention s'avère donc particulièrement modulaire. En outre, lors d'un changement de supports à convoyer à travers l'enceinte 1, il est aisé de remplacer les moyens de chauffage 100 présents dans l'enceinte 1 par d'autres moyens de chauffage 100, formant également un ensemble modulaire rapporté sur la base de l'enceinte, plus adaptés à la thermorétraction de manchons sur les nouveaux supports.

Par moyens de raccordement rapide, on entend bien sûr des moyens permettant de désolidariser directement l'ensemble unitaire de la base 10 simplement en soulevant l'ensemble unitaire comme des moyens de raccordement par enclipsage ou bien des moyens nécessitant une ou deux étapes de démontage très simples à l'aide d'un outil standard, comme un tournevis, avant de pouvoir soulever l'ensemble unitaire.

Selon un mode de réalisation particulier, les moyens de chauffage 100 comportent un châssis 102 qui porte les moyens de raccordement rapide et les moyens de diffusion de vapeur. Ici, le châssis 102 comporte deux longerons 103 s'étendant chacun le long d'un côté différent du convoyeur 2 et trois arceaux 104 solidarisés chacun à chaque longeron 103 de sorte que les arceaux 104 s'étendent au dessus du convoyeur 2. Les arceaux 104 sont ici agencés à intervalles réguliers sur les longerons 103. Chaque arceau 104 comporte ici deux montants verticaux 105a qui s'étendent, parallèlement entre eux, selon une normale à la base 10 lorsque le châssis 102 est rapporté sur la base 10. Une extrémité de chaque montant vertical 105a est liée à l'un des longerons et l'autre extrémité est libre. Chaque arceau 104 comporte en outre un montant horizontal 105b reliant les extrémités libres des deux montants verticaux 105a.

Les moyens de diffusion de vapeur sont ici seulement fixés à la base 10 par les moyens de raccordement rapide.

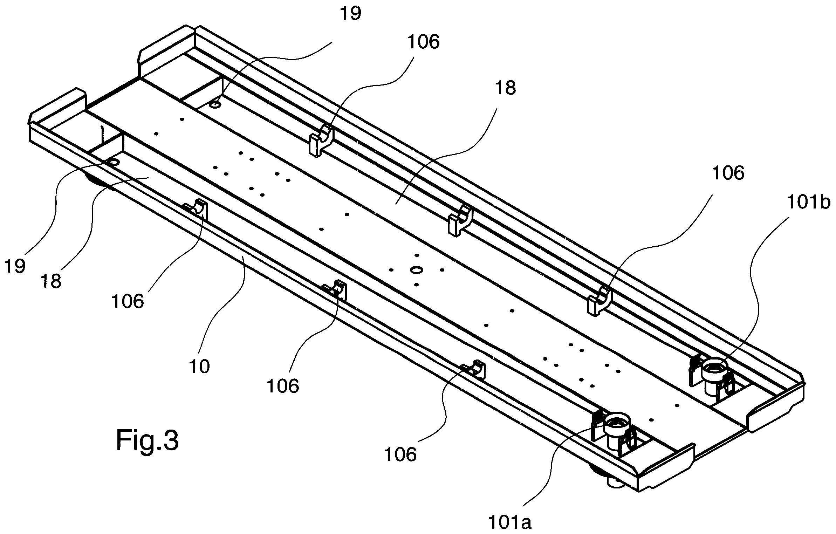

A cet effet, comme plus visible à la figure 3, la base 10 comporte ici des pieds de réception 106 qui sont situés de part et d'autre du convoyeur 2. Les pieds de réception 106 reçoivent les longerons 103 du châssis 102 lorsque celui-ci est rapporté sur la base 10. Le châssis 102 est donc seulement fixé à la base 10 par les moyens de raccordement et les pieds de réception 106 aident à stabiliser le châssis 102 sur la base 10. Les pieds de réception 106 sont ici agencés à intervalles réguliers sur la base 10.

Selon un mode de réalisation particulier, les moyens de diffusion de vapeur comportent une première série de diffuseurs qui sont solidarisés au châssis 102 de sorte que lesdits diffuseurs s'étendent tous sensiblement le long d'un premier côté du convoyeur 2 et une deuxième série de diffuseurs qui sont solidarisés au châssis 102 de sorte que lesdits diffuseurs s'étendent tous sensiblement le long d'un deuxième côté du convoyeur 2 opposé au premier côté.

Les diffuseurs s'étendent donc le long du convoyeur 2 sensiblement sur toute la longueur du convoyeur 2 et de part et d'autre du convoyeur 2 ce qui permet de diffuser de la vapeur sur les manchons tout le long du convoyage des supports dans l'enceinte 1. Le chauffage des manchons est ainsi régulier et donc mieux contrôlé.

Selon un mode de réalisation particulier, le châssis 102 comporte deux éléments comprenant des moyens de solidarisation temporaire entre eux, le premier élément portant la première série de diffuseurs et le deuxième élément portant la deuxième série de diffuseurs.

Ainsi, le châssis 102 peut être désolidarisé de la base 10 en bloc puis être séparé en ses deux éléments. Il est donc possible de ne modifier qu'une partie des diffuseurs en solidarisant par exemple le premier élément avec un nouveau deuxième élément portant une autre série de diffuseurs. L'installation selon l'invention s'avère donc particulièrement modulaire. En outre, lors d'un changement de supports à convoyer à travers l'enceinte 1, il est aisé de remplacer les diffuseurs d'une seule série par d'autres diffuseurs plus adaptés à la thermorétraction de manchons sur les nouveaux supports. Il s'avère donc aisé de réaliser une thermorétraction asymétrique pour des récipients comportant des faces différentes en choisissant judicieusement le premier élément et le deuxième élément.

Selon un mode de réalisation particulier, les différents diffuseurs sont solidarisés de façon démontable et réglable au châssis 102.

Ainsi, il s'avère très simple de changer ou de régler une partie ou la totalité des diffuseurs. Il n'est donc pas nécessaire de changer systématiquement les moyens de chauffage 100 mais seulement certains diffuseurs, par exemple lorsque seuls certains diffuseurs sont défectueux. L'installation selon l'invention s'avère donc encore plus modulaire. De plus, lors d'un changement de supports à convoyer à travers l'enceinte 1, il est possible et aisé de remplacer une partie ou la totalité des diffuseurs présents dans l'enceinte 1 par d'autres diffuseurs et/ou d'orienter différemment une partie ou la totalité des diffuseurs afin que les diffuseurs soient le plus adapté possible à la thermorétraction de manchons sur les nouveaux supports.

Ici, chaque arceau 104 porte au niveau de l'un des montants verticaux 105a un diffuseur de la première série et au niveau de l'autre des montants verticaux 105a un diffuseur de la deuxième série.

Ici, chaque diffuseur est solidarisé à l'arceau 104 associé de sorte être à déplaçable le long du montant vertical 105a associé. Le diffuseur est ainsi positionnable à des hauteurs différentes dans l'enceinte 1.

Chaque diffuseur est ici également solidarisé à l'arceau 104 associé de sorte à être déplaçable autour d'un axe de rotation sensiblement parallèle au montant horizontal 105b associé. Le diffuseur est ainsi orientable différemment par rapport aux supports convoyés par le convoyeur 2 tout en restant étendu le long du convoyeur 2.

Selon un mode de réalisation particulier, chaque diffuseur comporte une rampe 110 percée d'orifices de diffusion de vapeur et un tuyau d'amenée de vapeur (non représenté ici) raccordé à une extrémité à la rampe 110 et à l'autre extrémité aux moyens de raccordement rapide.

Ainsi, la rampe 110 a une forme particulièrement adaptée pour s'étendre le long du convoyeur 2 de sorte que les orifices de diffusion de vapeur forment sensiblement une ligne de diffusion de vapeur continue sur les manchons tout le long du convoyage des supports dans l'enceinte 1. Le chauffage des manchons est ainsi extrêmement régulier et donc mieux contrôlé.

La rampe 110 et le tuyau d'amenée sont par exemple en matériau composite ou en plastique.

Ainsi, les rampes 110 et les tuyaux d'amenée sont très légers ce qui permet d'avoir un ensemble unitaire de faible masse. En outre, dans l'art antérieur, les diffuseurs sont en métal. Or si le métal n'est pas de bonne qualité, il a tendance à s'oxyder ce qui provoque une obstruction partielle ou totale des orifices de diffusion et une pollution de la vapeur qui passe à travers lesdits orifices. Les rampes et les tuyaux d'amenée de l'invention permettent d'obvier à ces inconvénients.

Ici, chaque rampe 110 est solidarisée à l'arceau 104 associé sensiblement au niveau du centre de la rampe 110. Selon un mode de réalisation particulier, chaque rampe 110 est solidarisée à l'arceau 104 par une liaison permettant son positionnement réglable.

Selon un autre aspect de l'invention, les moyens de raccordement comportent un premier boîtier de distribution 111 connecté au premier orifice d'arrivée de vapeur 101a et un deuxième boîtier de distribution 112 connecté au deuxième orifice d'arrivée de vapeur 101b. Les rampes 110 de la première série sont toutes reliées au premier orifice d'arrivée de vapeur 101a par l'intermédiaire du premier boîtier 111 et les rampes de la deuxième série sont toutes reliées au deuxième orifice d'arrivée de vapeur 101b par l'intermédiaire de l'autre des boîtiers 112.

Ici, les rampes 110 de la première série sont toutes raccordées indépendamment les uns des autres au premier boîtier 111, le premier boîtier 111 permettant un réglage indépendant d'un débit de vapeur fourni à chaque rampe 110 par exemple par réglage de l'ouverture d'une vanne à ouverture réglable. De la même façon, les rampes 110 de la deuxième série sont toutes raccordées indépendamment les uns des autres au deuxième boîtier 112, le deuxième boîtier 112 permettant un réglage indépendant d'un débit de vapeur fourni à chaque rampe 110.

A cet effet, le premier boîtier 111 et le deuxième boîtier 112 comportent chacun des moyens de réglage de débits respectifs fournis à chaque rampe 110.

Les moyens de réglage comportent ici des ensembles vis-pointeau associés chacun à l'un des orifices de distribution de vapeur du boîtier auquel est connecté l'un des diffuseurs, chaque pointeau ayant un profil arrondi et étant déplaçable par la vis associée pour venir obstruer partiellement ou complètement l'orifice de distribution associé.

Grâce aux ensembles vis-pointeaux, le réglage du débit de vapeur distribué à chaque rampe 110 est très fin. En comparaison, dans l'art antérieur, le réglage s'effectue à l'aide d'un clapet qui ne peut être qu'ouvert ou fermé.

Ainsi, il s'avère très simple de régler indépendamment le débit fourni à chaque rampe 110. De plus, lors d'un changement de supports à convoyer à travers l'enceinte 1, il est possible et aisé de modifier le débit de vapeur fourni à une partie ou à la totalité des rampes 110.

Au final, l'installation selon l'invention offre de nombreuses opportunités de réglage et de changement partiel ou total des moyens de diffusion de vapeur ce qui permet d'adapter très finement la diffusion de vapeur dans l'enceinte au type de support et/ou de manchons convoyés.

De manière générale, l'installation sera de préférence agencée de sorte que les diffuseurs soient répartis symétriquement de part et d'autre du convoyeur et de façon régulière dans la chambre principale afin que la diffusion de vapeur soit la plus homogène possible dans la chambre principale.

Bien entendu les moyens de chauffage par vapeur d'eau de l'invention ne sont pas limités au mode de réalisation décrit et on peut y apporter des variantes.

En particulier, les moyens de diffusion pourront comporter un nombre différents de diffuseur. Les diffuseurs pourront ne pas comporter de rampes mais par exemple des buses de diffusion. Les diffuseurs pourront seulement être fixés sans être réglable et/ou sans être démontable sur le châssis. Bien qu'ici, il ait été décrit que les diffuseurs sont agencés sur le châssis au niveau des montants verticaux des arceaux, les diffuseurs pourront être solidarisés aux montants horizontaux des arceaux. Dans ce cas, on évitera de préférence que lesdits montants horizontaux forment la butée définissant la position de service de la cloison.

Le châssis pourra comporter un nombre différents d'arceaux. Les arceaux pourront être d'une autre forme que celle décrite par exemple les arceaux pourront être de forme circulaire.

Le châssis pourra ne pas être séparable en deux éléments distincts mais être d'un seul bloc. Si le châssis est séparable en deux éléments distincts, le châssis pourra également être séparable directement sur la base en plus d'être séparable une fois désolidarisé de la base.

A présent que les moyens de chauffage par vapeur 100 ont été décrits en détail, on s'attache maintenant à décrire l'enceinte 1.

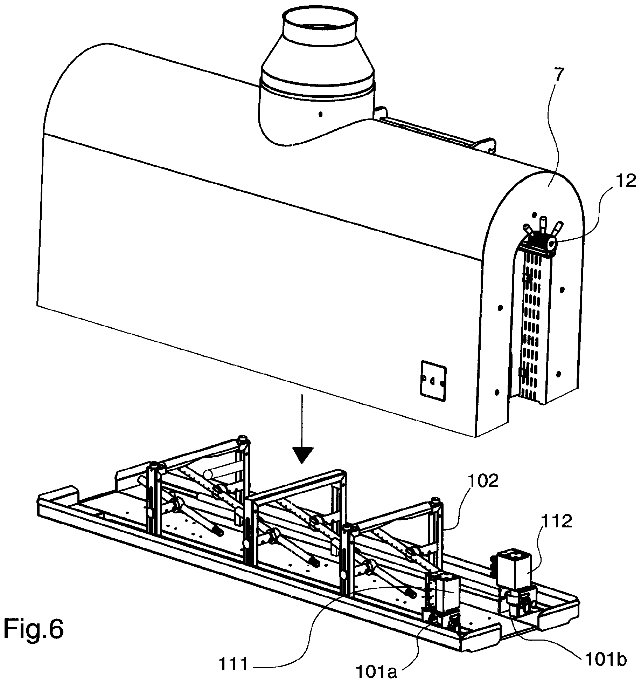

En référence aux figures 1, 2 et 6, l'enceinte 1 comprend une cloche 7 montée mobile entre une position opérationnelle où elle est rapportée à étanchéité contre la base 10 comme illustré à la figure 1, et une position dégagée permettant l'accès au convoyeur 2 comme illustré à la figure 6. Bien entendu, la cloche 7 comporte ici deux ouvertures 3, 4 au travers desquelles le convoyeur 2 s'étend lorsque la cloche 7 est en position opérationnelle.

Ainsi lorsque la cloche 7 est en position dégagée, il est bien plus aisé d'intervenir sur l'installation selon l'invention que sur une installation de l'art antérieur où l'enceinte est d'un seul bloc. En particulier, il s'avère bien plus simple d'agir sur les moyens de chauffage par vapeur d'eau 100 ou sur le convoyeur 2.

La cloche 7 est ici équipée d'au moins un joint d'étanchéité (non visible sur les figures) qui s'étend le long de ses bords en regard de la base 10 et qui, lorsque la cloche est en position opérationnelle, vient au contact de la base 10 en étant appuyé sur celle-ci avec une pression suffisante pour assurer une étanchéité de l'enceinte 1.

Selon un aspect particulier de l'invention, les parois latérales de la cloche 7 sont reliées par un sommet de la cloche qui est de forme arrondie.

La vapeur a tendance à se condenser sur les parois de la cloche 7 qui sont souvent froides. Le sommet de la cloche 7 est donc avantageusement conformé pour que les gouttes d'eau issues de la condensation se formant sur le sommet de la cloche 7 puissent s'écouler le long des parois latérales de la cloche 7 vers la base 10 lorsque la cloche 7 est en position opérationnelle. Ainsi, les gouttes d'eau ne retombent pas dans le centre de l'enceinte 1 et ne viennent donc pas polluer la vapeur d'eau ou les supports lors de la thermorétraction.

Ici, l'installation comporte des moyens de déplacement de la cloche 7 entre la position escamotée et la position dégagée qui comprennent une colonne verticale 5 le long de laquelle la cloche 7 coulisse entre sa position dégagée et sa position opérationnelle comme indiqué par la flèche. Les positions dégagée et opérationnelle sont ici à la verticale de la base 10. Bien entendu, par base, on entend que la base 10 est sensiblement parallèle au sol sur lequel repose l'installation.

Ainsi, même lorsque la cloche 7 est en position dégagée, l'installation est d'un encombrement réduit. En particulier, l'installation n'occupe que très peu de place au sol. Il s'avère donc très facile de circuler autour de l'enceinte 1 ce qui simplifie encore davantage une intervention sur la base 10, le convoyeur 2 ou les moyens de chauffage par vapeur d'eau 100. Le déplacement de la cloche 7 d'une position à une autre ne gêne donc pas un opérateur qui se trouverait à proximité de la base 10.

En référence aux figures 1, 2, 5 et 6, selon un mode de réalisation particulier, la cloche 7 comporte une cloison interne 12 montée mobile entre une position escamotée (comme visible aux figures 1, 2, 5 et 6) et une position de service dans laquelle la cloison 12 délimite avec des parois latérales de la cloche 7 et la base 10 une chambre principale 11 de l'enceinte 1 qui est soumise à l'action des moyens de chauffage par vapeur d'eau 100 lorsque la cloche 7 est en position opérationnelle. La cloison 12 forme ainsi un toit de la chambre principale 11.

Ainsi, grâce à la cloison 12, il n'est plus nécessaire de chauffer tout le volume intérieur de la cloche 7 mais uniquement le volume de la chambre principale 11. Il est donc possible de réduire la consommation d'énergie des moyens de chauffage par vapeur d'eau 100 grâce à la limitation du volume à chauffer. Ainsi, en jouant sur la position de service de la cloison 12, il est possible d'adapter le volume de la chambre principale 11 en fonction du type de support et/ou de manchon convoyés.

Selon un mode de réalisation particulier, la position de service de la cloison 12 est définie par butée de la cloison 12 contre les montants horizontaux 105b des arceaux 104.

De cette façon, il est aisé de définir la position de service de la cloison 12 et également de déterminer le volume de la chambre principale 11.

Selon un aspect particulier de l'invention, la position escamotée de la cloison 12 est définie par butée de la cloison 12 contre la cloche 7. Ici, la cloison 12 comporte un dôme 13 sur une face de la cloison 12 opposée à celle formant le toit de la chambre principale 11. Le dôme 13 est de forme complémentaire au sommet de la cloche 7. Ainsi, lorsque la cloison 12 est déplacée de la position de service à la position escamotée, le dôme 13 vient buter contre le sommet de la cloche 7 définissant ainsi la position escamotée de la cloison 12.

Ici, les moyens de déplacement agissent directement sur la cloison 12 pour lever celle-ci de sorte que lorsque la cloison 12 est déplacée depuis la position de service jusqu'à la position escamotée, le dôme 13 de la cloison 12 vient en butée contre le sommet de la cloche 7 et entraîne alors la cloche 7 de la position opérationnelle à la position dégagée. Inversement, lorsque les moyens de déplacement baissent la cloison 12, la cloche 7 descend avec la cloison 12 jusqu'à arriver en position opérationnelle, la cloison 12 continuant à descendre jusqu'à atteindre sa position de service en butée contre les moyens de chauffage par vapeur d'eau 100.

Selon un mode de réalisation particulier, la cloison 12 compote trois vannes à ouverture réglable 15a, 15b, 15c pour aspirer la vapeur présente dans la chambre principale 11 à travers la cloison 12 ce qui aide à réguler la température régnant dans la chambre principale 11 et évite un surplus de vapeur dans la chambre principale 11.

Les vannes 15a, 15b, 15c sont ici agencées à intervalle régulier le long de la cloison 12 et sont toutes sensiblement centrées sur la cloison 12. Ainsi, la vapeur est aspirée de façon sensiblement homogène dans la chambre principale 11 ce qui limite la perturbation de l'atmosphère ) dans la chambre principale 11.

Selon un mode de réalisation particulier, les trois vannes 15 sont agencées sur la cloison 12 de sorte à être situées sensiblement au-dessus de l'un des arceaux 104 pour l'extraction de la vapeur dans la chambre principale 11. Lesdites vannes 15 sont ainsi à la verticale des diffuseurs et sont donc particulièrement bien agencées pour extraire la vapeur puisque la concentration de vapeur est plus importante au niveau des diffuseurs.

Ici, l'ouverture de chaque vanne 15a, 15b, 15c est réglable de façon indépendante. Selon un mode de réalisation particulier, les ouvertures des vannes 15 peuvent être réglées même lorsque la cloche 7 est en position opérationnelle. A cet effet, la cloison 12 est équipée de moyens de réglage des vannes 15a, 15b, 15c qui comportent une tige 16 qui s'étend sur tout le long de la cloison 12 et à travers au moins l'une des ouvertures de la cloche 7 de sorte qu'une extrémité de la tige 16 soient située à l'extérieur de la cloche 7. La tige 16 comporte un premier conduit 16a qui s'étend entre l'extrémité de la tige 16 et un clapet de la première des vannes 15a de sorte qu'une rotation du premier conduit 16a relativement à la cloison 12 entraîne une rotation du clapet de la première vanne 15a. Les moyens de réglage comportent en outre un premier levier 17a d'orientation du premier conduit 16a relativement à la cloison 12 qui est porté par l'extrémité de la tige 16. Ainsi, le premier levier 17a accessible à l'extérieur de la cloche 7 permet de régler progressivement l'ouverture de la vanne. De même, les moyens de réglage comportent des conduits 16b, 16c et des leviers 17b, 17c associés respectivement à la deuxième vanne 15b et à la deuxième vanne 15c.

Selon un aspect particulier de l'invention, la cloison 12 comporte une bavette 24 s'étendant le long de ses bords et inclinée en direction de la base 10 lorsque la cloison 12 est en position de service. Ladite bavette 24 joue ici le rôle d'un joint d'étanchéité à la vapeur. En effet, la bavette 24 est conformée de sorte que, lorsque la cloison 12 est en position de service, la bavette 24 autorise l'écoulement des gouttes d'eau le long des parois latérales de la cloche 7 vers la base 10 mais empêche la vapeur d'eau de sortir de la chambre principale 11 en direction du sommet de la cloche 7.

Cela permet de mieux contrôler la température régnant dans la chambre principale 11 tout en autorisant malgré tout l'écoulement de l'eau vers la base 10.

En outre, si des gouttes d'eau formées sur le sommet de la cloche 7 tombent malgré tout sans s'écouler le long des parois latérales de la cloche 7, le dôme 13 permet d'éviter que lesdites gouttes tombent directement sur les faces de la cloison 12 ou sur les vannes 15a, 15b, 15c. De plus, la forme arrondie du dôme 13 favorise l'écoulement desdites gouttes, ou de gouttes qui se sont directement formées sur le dôme 13, en direction de la bavette 24 qui elle-même favorise l'écoulement des gouttes vers la base 10 le long des parois latérales de la cloche 7.

En référence à la figure 3, selon un mode de réalisation particulier, la base 10 comporte de façon symétrique deux gouttières 18 s'étendant chacune de part et d'autre du convoyeur 2 et le long du convoyeur 2, chaque gouttière 18 comportant chacune un orifice 19 (un seul étant illustré ici) relié à au moins un canal d'évacuation

La vapeur ayant tendance à se condenser sur les supports qui sont souvent froids, l'eau issue de la thermorétraction est donc avantageusement évacuée par les gouttières 18. Les gouttières 18 sont ici en pente en direction de l'orifice associé pour faciliter l'écoulement de l'eau.

De préférence, les gouttières 18 sont conformées pour recevoir également les gouttes d'eau qui se sont écoulées le long des parois latérales de la cloche 7 afin de faciliter l'évacuation de l'eau hors de l'enceinte.

En référence à la figure 2, l'enceinte comporte ici une première chambre secondaire 20 et une deuxième chambre secondaire 21, les chambres secondaires encadrant la chambre principale 11 et étant équipées chacune de moyens d'aspiration (non illustrés ici) de la vapeur présente dans les chambres secondaires.

La cloche 7 comprend ici une première paroi interne 22 et une deuxième paroi interne 23 qui définissent avec des faces latérales externes de la cloche 7 et avec la base 10, les chambres secondaires lorsque la cloche est en position opérationnelle. La première paroi interne 22 et une deuxième paroi interne 23 définissent en outre la chambre principale 11 avec la base 10 et la cloison 12. La cloison 12 se déplace donc uniquement dans la chambre principale 11 de sorte que les chambres secondaires restent d'un volume identique malgré un déplacement de ladite cloison 12.

Bien entendu l'enceinte décrite n'est pas limitative et on peut y apporter des variantes.

En particulier, l'enceinte pourra ne pas comporter de cloche mobile et/ou de cloison mobile.

Bien que dans l'exemple illustré, la cloche est déplacée selon un mouvement de translation verticale, la cloche pourra plus généralement être montée mobile entre la position dégagée et la position opérationnelle selon un autre mouvement que celui décrit, comme par exemple par un mouvement de rotation.

La cloison interne pourra être montée mobile entre la position de service et la position escamoté selon un autre mouvement que celui décrit comme par exemple un mouvement de rotation. Bien qu'ici, ce soit la cloison interne qui entraîne un mouvement de la cloche, on pourra faire en sorte que la cloche entraîne un mouvement de la cloison interne à la place.

De même, bien qu'ici la cloison comporte trois vannes d'extraction de la vapeur, la cloison pourra ne pas comporter de vanne ou un nombre différent de vannes. La vanne ou les vannes pourront être réglées toutes en même temps.

A présent que l'enceinte 1 a été décrite en détails, on s'attache enfin à décrire les moyens de génération de vapeur d'eau.

En référence aux figures 1 et 7, les moyens de génération de vapeur 200 comportent ici un canal d'amenée de vapeur 201 qui est connecté à une chaudière (non illustrée ici). Les moyens de génération de vapeur 200 comportent en outre ici un canal de purge 202.

Selon un mode de réalisation particulier, le canal d'amenée de vapeur 201 et le canal de purge 202 s'étendent tous deux à la verticale de l'installation et le long de l'installation, les moyens de génération restants étant agencés dans le bâti 6.

Les moyens de génération de vapeur occupent ainsi un volume réduit et ne gênent pas un opérateur qui se trouverait à proximité de la base 10 ce qui limite encore davantage la taille de l'installation vis-à-vis d'une installation de l'art antérieur.

Les moyens de génération de vapeur comportent ici un séparateur gaz/liquide 203 qui est connecté au canal d'amenée de vapeur 201 et qui est disposé en amont des orifices d'arrivée de vapeur 101a, 101b. Une canalisation de purge 204 est connectée entre le séparateur gaz/liquide 203 et le canal de purge 202 pour l'évacuation de l'eau issue de l'assèchement de la vapeur.

Ainsi, le séparateur gaz/liquide 203 permet d'assécher la vapeur provenant du canal d'amenée de vapeur 203 donc d'en améliorer la qualité. Il est rappelé que pour une bonne rétraction de manchon en matériau thermorétractable la vapeur doit être sèche et doit notamment présenter une température de l'ordre de 100° à 130° au niveau de la zone de contact avec les manchons.

Selon un mode de réalisation particulier, les moyens de génération de vapeur comportent une vanne à ouverture réglable 205 qui est connectée au séparateur gaz/liquide 203.

Selon un autre aspect de l'invention, les moyens de génération de vapeur comportent en outre des moyens de surchauffage de la vapeur avant son amenée aux moyens de chauffage par vapeur 100, les moyens de surchauffage étant ici agencés entre la vanne 205 et les orifices d'arrivé de vapeur 101a, 101b. Les moyens de surchauffage comprennent ici un canal de surchauffage comportant un conduit interne 210 dans lequel circule la vapeur et un conduit externe 211 concentrique au conduit interne 210 et recouvrant le conduit interne 210.

Ainsi, juste avant de pénétrer dans l'enceinte 1, la vapeur est réchauffée ce qui facilite la gestion de la température distribuée à l'enceinte 1.

Les moyens de surchauffage, le séparateur liquide/gaz 203 et la vanne 205 permettent ainsi d'améliorer la qualité de la vapeur reçue de la chaudière avant sa distribution à l'enceinte 1.

Selon un aspect de l'invention, les moyens de génération de vapeur 200 comportent des moyens de régulation adaptés à commander les moyens de génération de vapeur en fonction d'au moins une mesure de température régnant dans l'enceinte 1 de sorte à faire tendre la température mesurée vers une consigne de température donnée.

En effet, il est rappelé que le chauffage d'un manchon doit être particulièrement précis pour que le manchon se rétracte correctement sur le support. En contrôlant la température directement dans l'enceinte et non plus au niveau de la chaudière comme dans l'art antérieur, le chauffage est régulé à partir d'une mesure de température bien plus représentative du chauffage réellement subi par les manchons ce qui permet d'améliorer une thermorétraction des manchons sur les supports.

Ici les moyens de régulation comportent un capteur de température 212, comme plus visible à la figure 2, monté dans l'enceinte 1 et apte à mesurer une température régnant dans une zone déterminée de l'enceinte 1.

De préférence, la zone déterminée est à proximité immédiate d'un trajet de la vapeur en sortie des moyens de chauffage.

Ainsi, la mesure de température sera effectuée par le capteur 212 au plus près possible d'un des zones de diffusion de la vapeur aux supports afin d'obtenir une information la plus représentative possible du chauffage réellement subi par les manchons.

Selon un mode de réalisation particulier, le capteur 212 est agencé pour obtenir une information de température d'un jet de vapeur en sortie de l'un des orifices de diffusion d'une des rampes 110. Le capteur 212 est ici agencé le long du montant vertical 105a de l'un des arceaux 104 au dessus de la rampe associée 110.

Selon un mode de réalisation particulier, la zone déterminée est à proximité de la zone de diffusion de vapeur de l'enceinte 1 pour laquelle la thermorétraction du manchon est la plus délicate, par exemple à cause d'une forme particulière du support associé au manchon.

Selon un mode de réalisation particulier de l'invention, le capteur 212 est déplaçable dans l'enceinte 1 de sorte à être apte à mesurer une température régnant dans au moins deux zones déterminées différentes de l'enceinte 1. Le capteur 212 est par exemple solidarisé de façon démontable à l'enceinte 1. Ainsi, lorsqu'on souhaite mesurer la température dans une autre zone de l'enceinte 1, un opérateur peut venir désolidariser le capteur 212 d'une zone pour le solidariser de nouveau à l'enceinte 1 sur l'autre zone souhaitée.

Il est ainsi possible de réguler les moyens de génération de vapeur en fonction d'une prise de température que l'on peut adapter, par exemple si un nouveau type de support circule sur le convoyeur. Le chauffage de l'enceinte est ainsi particulièrement bien contrôlé ce qui assure une bonne qualité de thermorétraction des manchons sur les supports.

Selon un mode de réalisation particulier, les moyens de génération de vapeur 200 commandent la vanne 205 en fonction de la prise de température régnant dans l'enceinte 1 par le capteur 212 afin de réguler la température dans l'enceinte 1.

La température dans l'enceinte 1 est ainsi régulée par un contrôle du débit de vapeur fourni à l'enceinte. La vanne 205 permet donc de participer à la régulation de la température dans l'enceinte.

Bien entendu les moyens de génération de vapeur décrits ne sont pas limitatifs et on pourra apporter des variantes.

Les moyens de génération de vapeur pourront ne pas comprendre de moyens de surchauffage ou de séparateur liquide/gaz ou encore de vanne à ouverture réglable.

Les moyens de régulation de vapeur pourront comporter d'autres agencements de capteurs de température pour mesurer une température dans l'enceinte. Par exemple, les moyens de régulation pourront comporter un autre nombre de capteurs. Un capteur pourra être déplaçable dans l'enceinte de façon automatisée et non manuel. A cet effet, les moyens de régulation pourront comporter des moyens de déplacement en service du capteur d'une zone à une autre. L'enceinte pourra alors rester fermée même si on l'on souhaite mesurer la température dans une autre zone de l'enceinte. Les moyens de régulation pourront comporter plusieurs capteurs de température montés dans l'enceinte et aptes à mesurer chacun une température régnant dans une zone déterminée différente de l'enceinte, les moyens de régulation comportant des moyens de sélection d'une seule des températures mesurées par les capteurs pour commander les moyens de génération de vapeur. Ainsi, il n'y a alors pas besoin de procéder au déplacement manuel ou automatique des capteurs pour mesurer une température de l'enceinte dans une autre zone de l'enceinte mais seulement de sélectionner un autre capteur. En outre, l'enceinte peut rester fermée même si on l'on souhaite mesurer la température dans une zone de l'enceinte. Au moins l'un desdits capteurs pourra également être déplaçable dans l'enceinte de sorte à être apte à mesurer une température régnant dans au moins deux zones déterminées différentes de l'enceinte.

Bien qu'ici le capteur soit agencé sur un arceau du châssis, le capteur pourra être agencé différemment dans l'enceinte en étant par exemple agencé sur la cloison interne.

Quel que soit l'agencement du ou des capteurs, la zone ou les zones déterminées seront de préférence à proximité immédiate d'un trajet de la vapeur en sortie des moyens de chauffage.

Les moyens de régulation pourront commander les moyens de génération de vapeur à partir d'autres informations que la température dans l'enceinte comme par exemple à partir d'une information de la pression ou de la température au niveau des orifices d'arrivées de vapeur ou encore à partir d'une mesure d'une pression au niveau de la chaudière.

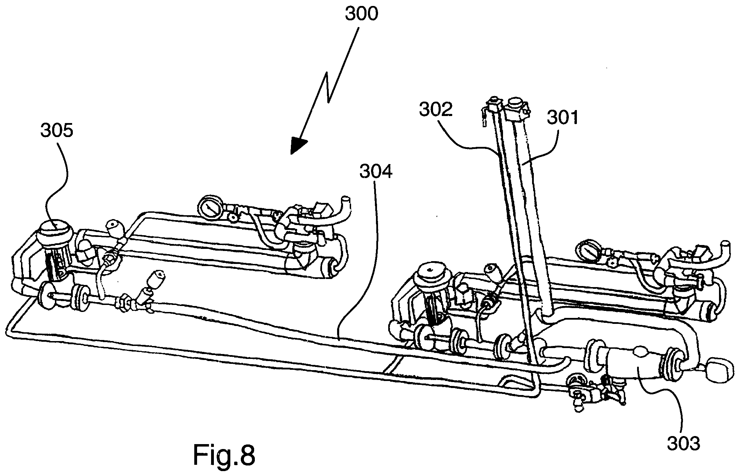

Bien qu'on ait décrit que l'installation ne comportait qu'un unique convoyeur, l'installation pourra comporter deux convoyeurs pour le convoyage de deux catégories de supports différentes ou identiques à travers deux enceintes différentes. Selon un mode de réalisation particulier, en référence à la figure 8, les moyens de génération de vapeur 300 ne comporteront alors qu'un unique canal de purge 301 et qu'un unique canal d'amenée de vapeur 302 ce qui limite la taille de l'installation. En sortie du séparateur gaz/liquide 303, une canalisation de transfert 304 amène la vapeur asséchée au niveau d'une deuxième vanne à ouverture réglable 305 qui est reliée à des moyens de surchauffage eux-mêmes connectés à des orifices d'arrivée de vapeur débouchant dans la deuxième enceinte, la deuxième vanne autorisant une régulation de la température dans la deuxième enceinte à partir d'une mesure de température prise dans la deuxième enceinte.

Bien qu'ici les vannes d'extraction de la vapeur de la cloison interne soient commandées manuellement, lesdites vannes d'extraction pourront également être commandés, par exemple être commandées par les moyens de régulation.

L'installation pourra également comporter des moyens de recyclage de l'eau évacuée par les gouttières de la base. L'eau pourra par exemple être évacuée par le canal de purge des moyens de génération de vapeur.

Les moyens de génération de vapeur pourront comporter un nombre différent d'orifices d'arrivée de vapeur.

L'enceinte, les moyens de chauffage par vapeur et les moyens de génération de vapeur ont ainsi été décrits en détail. Comme on peut le constater, l'installation selon l'invention est extrêmement modulaire et offre de multiples possibilités de réglage à un opérateur en fonction du chauffage et de la thermorétraction auxquelles l'opérateur souhaite aboutir. En outre, l'installation est de taille réduite et prend peu de place au sol. De plus, l'installation permet très facilement d'intervenir sur l'intérieur de l'enceinte grâce à la mobilité de la cloche. Par ailleurs, l'installation permet de réduire de façon significative la consommation en vapeur des moyens de chauffage par vapeur grâce aux possibilités de réglage des diffuseurs et des moyens de chauffage par vapeur en général et également grâce à la cloison interne de la cloche.

## Revendications

1. Installation de thermorétraction de manchons en matériau thermorétractable enfilés sur des supports, tels que des récipients, comportant :
- une enceinte (1),
- des moyens de diffusion de chaleur agencés dans l'enceinte, les moyens de diffusion de chaleur étant des moyens de chauffage par vapeur (100)
- au moins un convoyeur (2) pour convoyer les supports dans l'enceinte entre une entrée (3) de l'enceinte et une sortie (4) de l'enceinte,
l'installation étant **caractérisée en ce que** les moyens de chauffage par vapeur forment un ensemble unitaire rapporté de façon démontable sur une base (10) de l'enceinte, les moyens de chauffage par vapeur comportant :
des moyens de raccordement rapide à des moyens de génération de chaleur débouchant dans l'enceinte, les moyens de raccordement rapide étant ainsi adaptés à coopérer de façon étanche avec au moins un orifice d'arrivée de vapeur (101a, 101b) ménagé dans l'enceinte,
un châssis (102) qui porte les moyens de raccordement rapide, et
des moyens de diffusion de vapeur qui comprennent au moins un diffuseur (110) qui est connecté à l'orifice d'arrivée de vapeur (101a, 101b) par les moyens de raccordement rapide.

2. Installation selon la revendication 1, dans laquelle les moyens de chauffage par vapeur (100) sont seulement fixés à la base par les moyens de raccordement rapide.

3. Installation selon la revendication 1, dans laquelle le diffuseur (110) est solidarisé de façon démontable et réglable au châssis.

4. Installation selon la revendication 1, dans laquelle le diffuseur comporte une rampe (110) percée d'orifices de diffusion de vapeur, la rampe étant solidarisée au châssis (102) de sorte à s'étendre sensiblement le long du convoyeur, et un tuyau d'amenée de vapeur raccordé à une extrémité à la rampe et à l'autre extrémité aux moyens de raccordement rapide.

5. Installation selon la revendication 4, dans laquelle la rampe et le tuyau d'amenée de vapeur sont en matériau composite ou plastique.

6. Installation selon la revendication 1, dans laquelle les moyens de raccordement rapide comportent au moins un boîtier de distribution (111, 112) qui est connecté à l'orifice d'arrivée de vapeur (101a, 101b), les moyens de diffusion de vapeur comportent plusieurs diffuseurs (110) qui sont tous raccordés au même boîtier de distribution pour être reliés à l'orifice d'arrivée de vapeur.

7. Installation selon la revendication 6, dans laquelle les diffuseurs (110) sont tous raccordées indépendamment les uns des autres au boîtier (111, 112), le boîtier comporte des moyens de réglage de débits respectifs fournis à chaque diffuseur.

8. Installation selon la revendication 7, dans laquelle les moyens de réglage comportent des ensembles vis-pointeau associés chacun à l'un des orifices de distribution de vapeur du boîtier auquel est connecté l'un des diffuseurs, chaque pointeau ayant un profil arrondi et étant déplaçable par la vis associée pour venir obstruer partiellement ou complètement l'orifice de distribution associé.

9. Installation selon la revendication 1, dans laquelle les moyens de diffusion de vapeur comportent :
- une première série de diffuseurs (110) qui sont solidarisés au châssis (102) de sorte que lesdits diffuseurs s'étendent tous sensiblement le long d'un premier côté du convoyeur (2),
- une deuxième série de diffuseurs (110) qui sont solidarisés au châssis (102) de sorte que lesdits diffuseurs s'étendent tous sensiblement le long d'un deuxième côté du convoyeur (2) opposé au premier côté.

10. Installation selon la revendication 9, dans laquelle le châssis comporte deux éléments comprenant des moyens de solidarisation temporaires entre eux, le premier élément portant la première série de diffuseurs et le deuxième élément portant la deuxième série de diffuseurs.

11. Installation selon la revendication 9, dans laquelle les moyens de raccordement comportent deux boîtiers de distribution (111, 112) connectés à des orifices d'arrivée de vapeur distincts (101a, 101b), les deux boîtiers étant situés de part et d'autre du convoyeur (2) de sorte que les diffuseurs (110) de la première série soient tous reliés à l'un des orifices par l'intermédiaire de l'un des boîtiers et que les diffuseurs (110) de la deuxième série soient tous reliés à l'autre des orifices par l'intermédiaire de l'autre des boîtiers.

12. Installation selon la revendication 1, dans laquelle le châssis (102) comporte deux longerons (103) s'étendant chacun le long d'un côté différent du convoyeur (2) et au moins deux arceaux (104) solidarisés chacun à chaque longeron de sorte que les arceaux s'étendent au-dessus du convoyeur, le diffuseur étant solidarisé à l'un des arceaux.

13. Installation selon la revendication 12, dans laquelle la base de l'enceinte comporte des pieds de réception (106) recevant les longerons (103) du châssis (2), les pieds étant situés de part et d'autre du convoyeur.

14. Installation selon la revendication 1, comportant des moyens de génération de chaleur raccordés aux moyens de chauffage par vapeur et un bâti portant la base et dans lequel sont agencés au moins en partie lesdits moyens de génération de chaleur, l'installation comportant en outre des moyens de séchage par air chaud d'un bras de retour du convoyeur, lesdits moyens de séchage étant raccordés à des moyens d'extraction d'air dans le bâti.

15. Installation selon la revendication 1, dans laquelle l'enceinte comprend une cloche montée mobile entre une position dégagée permettant l'accès au convoyeur et une position opérationnelle où elle est rapportée à étanchéité contre la base, la cloche comportant deux ouvertures au travers desquelles le convoyeur s'étend lorsque la cloche est en position opérationnelle et comporte une cloison interne montée mobile entre une position escamotée et une position de service dans laquelle la cloison délimite avec des parois latérales de la cloche et la base une chambre principale de l'enceinte soumis à l'action des moyens de diffusion de chaleur lorsque la cloche est en position opérationnelle, la position de service de la cloison étant définie par butée de la cloison contre les moyens de diffusion de chaleur.

## Patentansprüche

1. Anlage zum Wärmeschrumpfen von Hüllen aus wärmeschrumpfbarem Material, die auf Träger, wie z. B. Behälter, aufgezogen sind, umfassend:
- eine Einfassung (1),
- Wärmediffusionsmittel, die in der Einfassung angeordnet sind,
wobei die Wärmediffusionsmittel Dampfheizmittel (100) sind,
- mindestens einen Förderer (2), um die Träger in der Einfassung zwischen einem Einlass (3) der Einfassung und einem Auslass (4) der Einfassung zu befördern,
wobei die Anlage **dadurch gekennzeichnet ist, dass** die Dampfheizmittel eine Einheit bilden, die auf abnehmbare Weise auf einer Basis (10) der Einfassung befestigt ist, wobei die Dampfheizmittel umfassen:
Schnellverbindungsmittel zur Schnellverbindung mit Wärmeerzeugungsmitteln, die in die Einfassung münden, wobei die Schnellverbindungsmittel so angepasst sind, dass sie auf dichte Weise mit mindestens einer in der Einfassung ausgebildeten Dampfeinlassöffnung (101a, 101b) zusammenarbeiten,
einen Rahmen (102), der die Schnellverbindungsmittel trägt, und
Dampfdiffusionsmittel, die mindestens einen Diffusor (110) umfassen, der über die Schnellverbindungsmittel mit der Dampfeinlassöffnung (101a, 101b) verbunden ist.

2. Anlage nach Anspruch 1, bei der die Dampfheizmittel (100) nur über die Schnellverbindungsmittel an der Basis befestigt sind.

3. Anlage nach Anspruch 1, bei der der Diffusor (110) auf abnehmbare und verstellbare Weise an dem Rahmen befestigt ist.

4. Anlage nach Anspruch 1, bei der der Diffusor ein von Dampfdiffusionsöffnungen durchbohrtes Rohr (110) umfasst, wobei das Rohr derart an dem Rahmen (102) befestigt ist, dass es sich im Wesentlichen entlang des Förderers erstreckt, sowie ein Dampfzuleitungsrohr, das an einem Ende an dem Rohr und an dem anderen Ende an den Schnellverbindungsmitteln angebracht ist.

5. Anlage nach Anspruch 4, bei der das Rohr und das Dampfzuleitungsrohr aus einem Verbundwerkstoff oder einem Kunststoff sind.

6. Anlage nach Anspruch 1, bei der die Schnellverbindungsmittel mindestens ein Verteilungsgehäuse (111, 112) umfassen, das mit der Dampfeinlassöffnung (101a, 101b) verbunden ist, wobei die Dampfdiffusionsmittel mehrere Diffusoren (110) umfassen, die alle an dasselbe Verteilungsgehäuse angeschlossen sind, um mit der Dampfeinlassöffnung verbunden zu sein.

7. Anlage nach Anspruch 6, bei der die Diffusoren (110) alle unabhängig voneinander an dem Gehäuse (111, 112) angeschlossen sind, wobei das Gehäuse Mittel zum Regeln der jeweiligen Mengen umfasst, mit denen jeder Diffusor versorgt wird.

8. Anlage nach Anspruch 7, bei der die Regelmittel Einheiten aus Schraube und Nadel umfassen, die jeweils mit einer der Dampfverteilungsöffnungen des Gehäuses in Verbindung stehen, mit dem einer der Diffusoren verbunden ist, wobei jede Nadel ein abgerundetes Profil hat und durch die dazugehörige Schraube verschiebbar ist, um die dazugehörige Verteilungsöffnung teilweise oder ganz zu verschließen.

9. Anlage nach Anspruch 1, bei der die Dampfdiffusionsmittel umfassen:
- eine erste Reihe von Diffusoren (110), die fest mit dem Rahmen (102) verbunden sind, so dass sich die genannten Diffusoren alle im Wesentlichen entlang einer ersten Seite des Förderers (2) erstrecken,
- eine zweite Reihe von Diffusoren (110), die fest mit dem Rahmen (102) verbunden sind, so dass sich die genannten Diffusoren alle im Wesentlichen entlang einer zweiten Seite des Förderers (2) erstrecken, die der ersten gegenüberliegt.

10. Anlage nach Anspruch 9, bei der der Rahmen zwei Elemente umfasst, die temporäre Verbindungsmittel zu deren gegenseitiger Verbindung umfassen, wobei das erste Element die erste Reihe von Diffusoren trägt und das zweite Element die zweite Reihe von Diffusoren trägt.

11. Anlage nach Anspruch 9, bei der die Verbindungsmittel zwei Verteilungsgehäuse (111, 112) umfassen, die mit den verschiedenen Dampfeinlassöffnungen (101a, 101b) verbunden sind, wobei sich die beiden Gehäuse zu beiden Seiten des Förderers (2) befinden, so dass die Diffusoren (110) der ersten Reihe alle über eines der Gehäuse mit einer der Öffnungen verbunden sind und die Diffusoren (110) der zweiten Reihe alle über das andere Gehäuse mit der anderen Öffnung verbunden sind.

12. Anlage nach Anspruch 1, bei der der Rahmen (102) zwei Längsträger (103) umfasst, die sich jeweils entlang einer anderen Seite des Förderers (2) erstrecken, sowie mindestens zwei Bögen (104), die jeweils fest mit jedem Längsträger verbunden sind, so dass sich die Bögen über den Förderer erstrecken, wobei der Diffusor fest mit einem der Bögen verbunden ist.

13. Anlage nach Anspruch 12, bei der die Basis der Einfassung Aufnahmefüße (106) umfasst, die die Längsträger (103) des Rahmens (2) aufnehmen, wobei sich die Füße zu beiden Seiten des Förderers befinden.

14. Anlage nach Anspruch 1, umfassend Wärmeerzeugungsmittel, die mit den Dampfheizmitteln verbunden sind, sowie ein Gestell, das die Basis trägt und in dem die Wärmeerzeugungsmittel zumindest teilweise angeordnet sind, wobei die Anlage ferner Heißlufttrocknungsmittel zur Trocknung eines Rücklaufzweig des Förderers umfassen, wobei die Trocknungsmittel mit Luftextraktionsmitteln in dem Gestell verbunden sind.

15. Anlage nach Anspruch 1, bei der die Einfassung eine Glocke umfasst, die zwischen einer ausgerückten Position, die einen Zugang zum Förderer gestattet, und einer Betriebsposition beweglich gelagert ist, in der sie auf dichte Weise an der Basis befestigt ist, wobei die Glocke zwei Öffnungen umfasst, durch die sich der Förderer erstreckt, wenn die Glocke in der Betriebsposition ist, und eine Innenwand umfasst, die zwischen einer ausgerückten Position und einer Betriebsstellung beweglich gelagert ist, in der die Wand mit Seitenwände der Glocke und der Basis eine Hauptkammer der Einfassung begrenzt, die der Wirkung der Wärmediffusionsmittel ausgesetzt ist, wenn die Glocke in der Betriebsposition ist, wobei die Betriebsstellung der Wand durch Anschlag der Wand an den Wärmediffusionsmitteln definiert ist.

## Claims

1. A facility for heat-shrinking sleeves made of a heat-shrinkable material inserted onto supports, such as containers, comprising:
- an enclosure (1),
- heat-diffusion means arranged in the enclosure, heat-diffusion means being a means for heating by steam (100)
- at least one conveyor (2) for carrying the supports through the enclosure between an intake (3) of the enclosure and an output (4) of the enclosure,
with the facility being **characterized in that** the heating by steam means form a single unit removably mounted on the base (10) of the enclosure, with the heating by steam means including :
a means for quick connection to a heat-generation means leading into the enclosure,
the quick-connection means being thus capable of sealingly engaging with at least one steam-intake opening (101a, 101b) being arranged in the enclosure,
a framework (102) which support the quick-connection means, and
steam-diffusion means which comprises at least one diffuser (110) which is connected to the steam-intake opening (101a, 101b) by the quick-connection means.

2. A facility according to claim 1, wherein the heating by steam means (100) is attached on the base by the quick-connection means only.

3. A facility according to claim 1, wherein the diffuser is removably and adjustably secured to the framework.

4. A facility according to claim 1, wherein the diffuser comprises a manifold (110) pierced with openings for diffusing steam, the manifold being secured to the framework (102) such as to extend substantially along the conveyor, and a pipe for carrying steam connected by one end to the manifold and by the other end to the quick-connection means.

5. A facility according to claim 4, wherein the manifold and the steam carrying pipe are, for example, made of a composite or plastic material.

6. A facility according to claim 1, wherein the quick-connection means comprises at least one distribution housing (111, 112) which is connected to the steam-intake opening (101a, 101b), the steam-diffusion means comprises several diffusers (110) which are all connected to the same distribution housing to be connected to the steam-intake opening.

7. A facility according to claim 6, wherein diffusers (110) are all connected independently from one another to the distribution housing (111, 112), said distribution housing comprising adjustment means for adjusting the respective flow rates supplied to each diffuser.

8. A facility according to claim 7, wherein the adjustment means herein comprises screw-needle assemblies each associated with one of the steam-distribution openings of the housing to which one of the manifolds is connected, each needle having a rounded profile and being movable by the associated screw in order to obstruct all or part of the associated distribution opening.

9. A facility according to claim 1, in which the heat-diffusion means includes:
- a first series of diffusers (110) which are secured to the frame (102) so that said diffusers can all substantially extend along a first side of the conveyor (2),
- a second series of diffusers (110) which are secured to the frame (102) so that said diffusers can all substantially extend along a second side of the conveyor (2) opposite the first side.

10. A facility according to claim 9, wherein the framework comprises two elements including a means for provisionally securing said elements together, the first element supporting the first series of diffusers and the second element supporting the second series of diffusers.

11. A facility according to claim 9, wherein the connection means comprises two distribution housings (111, 112) connected to distinct steam-intake openings (101a, 101b), with the two housings being placed on either side of the conveyor (2) so that the diffusers (110) of the first series can all be connected to one of the openings through one of the housings and so that the diffusers (110) of the second series can all be connected to the other opening through the other housing.

12. A facility according to claim 1, wherein the frame (102) includes two side rails (103) each one extending along a different side of the conveyor (2) and at least two arches (104), with each one being secured on each side rail so that the arches extend above the conveyor, with the diffuser being secured on one of the arches.

13. A facility according to claim 12, wherein the base of the enclosure includes feet (106) for receiving the frame (2) side rails (103), with the feet being placed on either side of the conveyor.

14. A facility according to claim 1, comprising a heat-generation means connected to the heating by steam means and a frame supporting the base, in which said heat-generation means is at least partially arranged, the facility also comprising a means for drying a return arm of the conveyor by hot air, said drying means being connected to a air-extraction means in the frame.

15. A facility according to claim 1, wherein the enclosure includes a hood mounted mobile between an open position allowing access to the conveyor and an operational position in which it is securely mounted on the base, the hood comprising two openings through which the conveyor extends when the hood is in operational position and comprises an inner partition mounted mobile between a retracted position and a service position in which the partition defines with side walls of the hood and the base a main chamber of the enclosure subjected to the action of the heat-diffusion means when the hood is in operational position, with the service position of the partition being defined by abutment of the partition against the heat-diffusion means.
